# NEUE EUROPÄISCHE PATENTSCHRIFT

(11) **EP 1 322 982 B2**
(45) Veröffentlichungstag und Bekanntmachung des Hinweises auf die Entscheidung über den Einspruch: **18.02.2015**
(45) Hinweis auf die Patenterteilung: 13.02.2008
(21) Anmeldenummer: 01976264.0
(22) Anmeldetag: 02.10.2001
(51) Int. Cl.: G02B 7/16, G02B 21/24

(54) **Verfahren zur Ansteuerung eines Wechselsmagazin für Mikroskope**
Method for controlling an interchangable cartridge for microscopes
Procédé pour assurer la commande d'ub magasin échangeur pour microscopes

(30) Priorität: 06.10.2000 DE 10050824
(43) Veröffentlichungstag der Anmeldung: 02.07.2003
(73) Patentinhaber: Boecker, Ralf, 37081 Göttingen (DE)
(72) Erfinder: NOLTE, Frank, 37127 Dransfeld (DE); BOECKER, Ralf, 37081 Göttingen (DE)
(74) Vertreter: Boecker, Joachim
(86) Internationale Anmeldenummer: PCT/EP2001/011370
(87) Internationale Veröffentlichungsnummer: WO 2002/029466

(56) Entgegenhaltungen:
- EP-B1- 0 307 421
- DE-A- 3 711 843
- DE-A1- 4 028 241
- DE-A1- 4 417 424
- JP-A- H07 128 573
- US-A- 6 154 312
- PATENT ABSTRACTS OF JAPAN vol. 1995, no. 08, 29. September 1995 (1995-09-29) -& JP 07 128573 A (OLYMPUS OPTICAL CO LTD), 19. Mai 1995 (1995-05-19)

## Beschreibung

Die Erfindung betrifft ein Verfahren zur Ansteuerung eines Wechselmagazins für Mikroskope gemäß dem Oberbegriff des Anspruches 1. Ein solches Verfahren ist bekannt aus der JP-A-11095087 und JP-A-11095088 (nachveröffentlicht in der US-A-6 154 312).

Die Umschaltung von optischen Komponenten In Mikroskopen wie ObJektiven, Reflektoren, Alter usw.), die in Wechselmagazinen (Revolver, Schieber. Schlitten o.ä.) angeordnet sind, erfordert oft sehr hohe Positionierganauigkeit.

Um diese bei einer automatisch motorischen Umschaltung zu erreichen sind zwei Prinzipien bekannt
1. Freie Positionierung mittels hochgenauem Antrieb, z.B. durch Synchron-Schrittmotor mit Mikroschritt-Ansteuerung oder einen mit hochauflösendem Positionssensor geregelten Antrieb. Die einzelnen Umschalt-Positlonen sind dabei Im vorhinein festgelegt, so daß sie ohne weitere Rückkopplung (= "blind") mit einem vorher festgelegten Beschleunigungs- und Bremsvorgang gezielt und schnell angefahren werden können. Nachteilig sind dabei die hohe Anforderungen an Motor und Getriebe, deren Positionsauflösung und Reproduzierbarkeit die Positioniergenaulgkeit bestimmt.
2. Positionierung durch eine mechanische Rastvorrichtung, die mit Hilfe eines Energiespeichers (z.B. Federelement) Innerhalb eines gewissen Fangbereichs eine ausreichende Kraft erzeugt, um unter Überwindung der Reibungskräfte das Wechselmagazin präzise reproduzierbar In seine definierten Rastpositionen zu bewegen. Dabei muß der Antriebsmotor das Wechselmagazin lediglich (gegen die Haltekraft der Rastvorrichtung) aus seiner alten Rastposition herausbewegen und bis in den Fangbereich der Zielposition führen.

Für eine schnelle Umschaltung muß die träge Masse des Wechselmagazins bei Erreichen der Zielposition wieder ausreichend abgebremst werden, damit es in der Rast möglichst sanft zum Stillstand kommt und nicht unerwünscht pendelt oder gar über das Ziel hinaus schleßt.

Die Bremsung wird im einfachsten Fall durch die mechanische Reibung des Getriebes nach Abschalten des Motors Im Leerlauf bewirkt. Vorteilhaft wird zusätzlich durch elektrisches Kurzschließen des Antriebsmotors dessen elektro-magnetische Bremswirkung genutzt. Es ist auch möglich, den Motor aktiv mit einem entgegengesetzten Stromimpuls zu beaufschlagen, der jedoch Motor und Stromversorgung stark belastet und der schwierig zu dosieren ist, um nicht eine entgegengesetzte Pendelbewegung anzuregen.

Bei den bisher bekannten Lösungen sind Geber vorgesehen, die an der gewünschten Zielposition das Erreichen des Fangbereichs signalisieren, um den Antrieb abzuschalten und den Bremsvorgang auszulösen. Zusätzliche Geber können eingesetzt werden, um die eindeutige Unterscheidung der einzelnen Rastpositionen durch eine absolute Kodierung zu erreichen, wodurch bei der Initialisierung ein Anfahren und Abzählen der Rastpositionen vermieden wird.

Wenn der Bremsvorgang erst bei Signalisierung durch den Geber im Fangbereich der Rastvorrichtung ausgelöst wird, ist wegen der Massenträgheit des Wechselmagazins eine hohe Bremskraft erforderlich, die den Antrieb elektrisch und mechanisch stark beansprucht und störende Erschütterungen des gesamten Gerätes verursachen kann. Wenn die Fahrgeschwindigkeit Im Verhältnis zur verfügbaren Bremskraft zu groß ist, ist der Verzehr der Bewegungsenergie mit unerwünschten Pendelbewegungen (Prellen) im Fangbereich der Rastvorrichtung verbunden, die den Einschwingvorgang bis zur Stabilisierung des Systems verzögern oder das Magazin sogar wieder aus dem Fangbereich heraus federn lassen. Die verfügbare Bremskraft und der Fangbereich begrenzen somit die zulässige Fahrgeschwindigkeit und bestimmen die Gesamtdauer sowohl des eigentlichen Wechsels als auch der nachfolgenden Stabilisierung (Einschwingvorgang). Ein schneller Wechselvorgang beeinflußt bei vielen Anwendungen entscheidend die Laufzeit bzw. Taktrate.

Aus den der JP-A-11095087 beziehungsweise der JP-A-11095088 ist ein verfahren nach dem Oberbegriff des Anspruches 1 bekannt, bei dem bei einer Umschaltung die Länge des ab Ausgangs-Rastposition zurückgelegten Weges gemessen wird und der Meßwert für die Bestimmung des Zeitpunktes der Abschaltung des motorischen Antriebes verwendet wird. In der Druckschrift ist auch vorgesehen, mit einer zweistufigen Fahrgeschwindigkeit zu arbeiten, wobei kurz vor dem Erreichen der Ziel-Rastposition von einer hohen Fahrgeschwindigkeit auf eine niedrige Restgeschwindigkeit heruntergeschaltet wird und die vollständige Abschaltung des Motors erst beim Eintreffen eines Signals von dem Rast-Sensor der Ziel-Rastposition erfolgt. Bei diesem bekannten verfahren wird der Motor einfach eingeschaltet und ausgeschaltet, wobei bei den Ausschaltungen der Motor kurzgeschlossen wird, so daß die Geschwindigkeitsänderungen annähernd schlagartig erfolgen. Zur Bestimmung des zurückgelegten Weges wird bei dem bekannten Verfahren ein Winkelmesser verwendet.

Aus der EP 0 307 421 ist ebenfalls ein Verfahren nach dem Oberbegriff des Anspruches 1 bekannt, bei dem wie bei dem vorgenannten Verfahren nach den japanischen Druckschriften mit einer zweistufigen Fahrgeschwindigkeit gearbeitet wird. Das Verfahren der EP 0 307 421 arbeitet mit einer Drehzahlregelung und benötigt eine Drehzahlmessung in Gestalt eines Tachogenerators. Zur Festlegung der Wegstelle für der Umschaltung von der hohen auf die niedrige Fahrgeschwindigkeit, welche Wegstelle unmittelbar vor dem eigentlichen mechanischen Einrastvorgang liegt, sind ein "Langsam"- Sensor und zugehörige "Langsam"- Markierungsmitteln erforderlich. Alleiniges Ziel dieses Verfahrens ist es, die Fahrzeit zwischen Start und Zielposition des Revolvers zu verkürzen.

Der Erfindung liegt die Aufgabe zugrunde, ein Verfahren nach dem Oberbegriff des Anspruches 1 zu entwickeln, welches ein den Antrieb und den Rastmechanismus schonendes Umschalten und ein harmonisches und sanftes Fahrverhalten ermöglicht, den Einsatz eines Kosten verursachenden Winkelmessers überflüssig macht, aber trotzdem eine relativ hohe Fahrgeschwindigkeit ermöglicht.

Die naheliegende Lösung, den Fangbereich der Rastvorrichtung zu erweitern und so die damit verbundenen Signalisierung vorzuverlegen, stößt an technische Grenzen, weil die Rastvorrichtung nur über einen begrenzten Energiespeicher verfügt, der über die gesamte Strecke des Fangbereichs eine ausreichende Kraft entwickeln muß, um das Wechselmagazin auch ohne motorischen Antrieb gegen alle Reibungskräfte sicher in seine definierte Stellung zu führen (Federenergie = Integral aus Federkraft x weg über den Fangbereich).

Eine Verbreiterung nur des Rastsignals, so daß der Geber bereits vor Erreichen des Fangbereichs anspricht, ist problematisch, weil dann ein unzulässiger Zustand entstehen kann, wenn das Magazin in einer undefinierten Zwischenposition außerhalb des Fangbereichs stehengeblleben ist, der Geber jedoch einen eingerasteten Zustand signalisiert. Das Rastslgnal sollte daher nur Innerhalb des Fangbereich der Rast aktiv sein.

Die Erfindung löst die beschriebene Aufgabe, indem das einfache Rastprinzip kombiniert wird mit einer "vorausschauenden" Fahrweise mit einem bestimmten Fahrgeschwindigkeitsprofil über den Weg v(x), das entsprechend den als bekannt vorausgesetzten Rastpositionen xₗ Im vorhinein bestimmt werden kann. So kann der Bremsvorgang bereits *vor* Erreichen des Fangbereichs, also vor Eintritt des Rastsignals eingeleitet werden. Im Gegensatz zur freien Positionierung mit Schrittmotor oder positionsgeregeltem Antrieb ist dabei keine besondere Präzision erforderlich, weil der Fangbereich der Rastvorrichtung größere Toleranzen auszugleichen vermag.

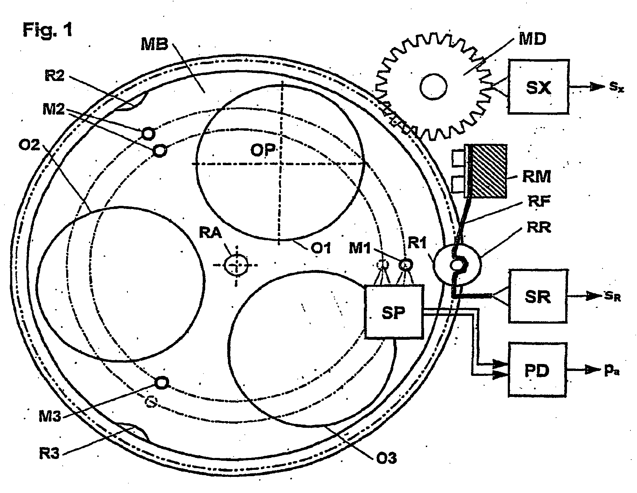

Fig. 1 zeigt beispielhaft ein Revolver-Wechselmagazin, bestehend aus
einem um die Achse RA drehbar gelagerten Magazinkörper MB, der hier 3 Objekte 01...03 wie Objektive oder Fluoreszenztellerwürfel trägt die wechselweise in die Objektposition OP gedreht werden können,
einem motorischen Antrieb MD mit optionalem Weg- bzw. Geschwindigkeitssensor SX, der ein weg- bzw. geschwindigkeitsabhänglges Signal S_{X} liefert,
einer Rastvorrichtung (Rastmechanismus) RM, hier bestehend aus einer Laufrolle RR. die angedrückt durch die Rastfeder RF in eine der Rastmulden R1...R3 des Magazinkörpers greift, mit optionalem Rastsensor SR, der den Eintritt in den Fangbereich der Rastposition signalisiert, indem beispielsweise beim Anheben der Feder eine Lichtschranke ein Signal auslöst, das den Eintritt in den Fangbereich signalisiert
einer Positionserkennung, bestehend aus einem Sensorsystem SP, beispielsweise Hall-Sensoren und einer Dekodiereinrichtung PD, die anhand von Markierungen M1...M3 am Magazin, bestehend beispielsweise aus Magneten die aktuell eingestellte Rastposition pₐ = 1...3 erkennt Auf den dargestellten zwei Spuren sind entweder zwei Magnete oder einer auf jeweils einer oder der anderen Spur vorgesehen, so daß eine eindeutige Erfassung der Position relativ zu den Markierungen M1-M3 ermöglicht wird.

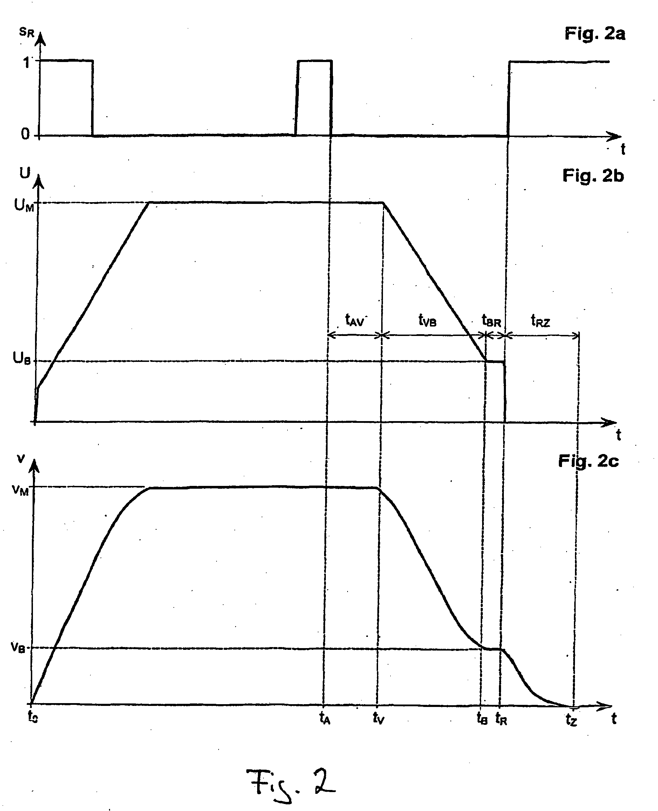

Fig.2 zeigt den zeitlichen Verlauf eines Bewegungsablaufes mit Positionserkennung und Rastsensor, als typische Signalverläufe bei beispielhaftem Wechsel über zwei Rastpositionen, von denen die erste ohne Halt Überfahren wird, um die zweite als Ziel zu erreichen:
**Fig. 2a**: Zeitverlauf des digitalen Rastsignals vom Geber s_{R}(t),
**Fig. 2b**:Zeitverlauf der elektr. Steuerspannung für den Antriebsmotor U(t),
**Fig. 2c****:**Resultierender Zeitvertauf der Bewegungsgeschwindigkeit des Magazins v(t)

Der Wechselvorgang läßt sich in folgende Phasen gliedern:
1. Ausrastphase bis zum Verlassen des Fangbereichs,
2. Beschleunigungsphase
3. Fahrphase (ggf. mit Überfahren von Zwischenpositionen ohne Halt),
4. Bremsphase (endet im Fangbereich der Zielposition)
5. Einrastphase (durch Rastvorrichtung bei abgeschaltetem Antrieb)

Bei Wechsel in eine benachbarte Position kann die Fahrphase auch entfallen, so daß die Beschleunigungsphase unmittelbar in die Bremsphase übergeht. Zur Ablaufsteuerung dieser Phasen mit einem bestimmten Geschwindigkeitsprofil Über den Weg v(x) kommen folgende Prinzipien in Betracht
Rein zeitliche Steuerung des Ablaufs, wobei das Geschwindigkeitsprofil v(x) über den Weg x(t) durch eine Zeitfunktlonen v(t) ersetzt wird. Das Geschwindigkeitsprofil v(t) wird dann so ausgelegt, daß dessen Integral Über die Zeit gerade der zu fahrenden Wegstrecke von der verlassenen Rast bis in den Fangbereich der Zielposition entspricht. Bei einem Gleichstrom-Motor mit Nebenschlußverhalten (v etwa proportional U) läßt sich die Geschwindigkeit auf einfache Weise mittels der Antriebsspannung U(t) steuern, z.B. durch Amplituden- oder Pulsweitenmodulation. Falls die dabei zugrundeliegende Versorgungsspannung größeren Schwankungen unterliegt, kann sie gemessen werden, um die Zeitskala entsprechend anzupassen.

### Steuerung ohne Sensor-Rückkopplung

Eine andere, besonders billige Ausführung kann auch völlig auf den Rast-Sensor verzichten, wenn die Weg-Steuerung hinreichend genau ist, um auch ohne Rückkopplung durch das Gebersignal sicher direkt Innerhalb des Fangbereichs der anzufahrenden Rastposition zu landen. Es gibt dann nur eine finale Bremsphase und der Bewegungsablauf beginnt unmittelbar mit Einschalten des Motors und umfaßt Ausrastvorgang und Beschleunigungshase. Dabei ist eventuell In Kauf zu nehmen, daß ein einzelner Wechsel nur In einem begrenzten Bereich benachbarter Positionen möglich ist, weil nach einer gewissen Fahrstrecke ein Rastvorgang ausgeführt werden muß um aufgelaufene Toleranzen zu kompensieren. Diese Ausführung bietet sich daher bei geringer Anzahl von Rastpositionen an oder wenn es ausreicht, nur schrittweise von einer Position in die jeweils nächste zu wechseln. Der völlige Verzicht auf einen Geber zur Rückkopplung bedingt allerdings auch, daß die Initiallsierung nach dem Einschalten nur entweder durch bilndes (vorsichtiges) Anfahren einer mechanisch begrenzten Endlage (Endanschlag bei linearem Schieber bzw. Winkelanschlag bei rotatorischem Revolver unter Verzicht auf eine Wegoptimierung) oder durch einen extern gesteuerten Einrichtvorgang, z.B. manuell durch den Anwender oder durch andere automatische Hilfsmittel ("Roboter") erfolgen kann.

### Zwei-phasiger Bremsvorgang mit Rast-Sensor

Dabei wird der Bremsvorgang eingeteilt in eine *Vorbremsung,* die über den Weg gesteuert vor Erreichen des Fangbereichs beginnt und eine abschließende *Rastbremsung*, die durch das Gebersignal exakt im Fangbereich ausgelöst wird.

Der Bewegungsablauf v(x) wird gemäß Fig. 2 Über den Zeitverlauf der Bewegung v(t) mit der Antriebsspannung U(t) eines Glelchstrommotors mit Nebenschlußverhalten (v proportional U) gesteuert werden. Der Ablauf wird dabei zum Zeitpunkt t_{A} durch dasjenige Gebersignal gestartet, das durch die der gewünschten Zielposition *vorausgehende* Rast hervorgerufen wird, wobei die von dort aus erwartungsgemäß zurückzulegende Wegstrecke im vorhinein bekannt ist: Nach einer geeignet festgelegten Verzögerungszeit t_{AV} beginnt die Vorbremsphase, In der bis zum Zeitpunkt t_{B} die Antriebsspannung auf den Wert U_{B} abgesenkt wird, wodurch sich eine entsprechende Restgeschwindigkeit v_{B} einstellt. Sobald zum Zeitpunkt t_{R} das Rastsignal eintritt, wird die normale Rastbremsung (vorzugsweise durch Kurzschließen des Antriebsmotors) ausgelöst.

Der Spannungswert U_{B} bzw. die Restgeschwindigkeit v_{B} ist so zu bemessen, daß die Rastbremsung im Idealfall gerade ohne eine Pendelbewegung abläuft. Verzögerung t_{AV} und Vorbremsphase t_{VB} sind so auszulegen, daß sie möglichst kurz vor Eintritt des Rastsignals abgeschlossen sind. Das Zeitintervall t_{BR} zwischen Ende der Vorbremsphase und Beginn der Rastbremsung überbrückt mögliche Toleranzen im Ablauf der Bewegung und sollte nicht länger als nötig sein. Dabei ist die Funktion bis zu einem gewissen Grade auch noch gewährieistet, falls aufgrund ungünstiger Toleranzverschiebungen das Rastsignal zum Zeitpunkt t_{R} bereits eintreten sollte, bevor die Vorbremsphase ganz abgeschlossen ist Die Rastbremsung würde dann bereits bei einer etwas größeren Restgeschwindigkeit beginnen, wodurch ein noch zu tolerierendes leichtes Überschwingen auftreten kann.

Das Geschwindigkeitsprofil beim Wechsel von einer Rast In die unmittelbar folgende unterscheidet sich wegen der anfänglichen Beschleunigung von dem Geschwindigkeitsprofil beim Überfahren von einer oder mehreren Zwischenpositionen, so daß hierfür zumindest unterschiedliche Verzögerungsintervalle t_{AV} festzulegen sind. Entsprechendes gilt bei eventuell unterschiedlichem Abstand zwischen den einzelnen Rastpositionen.

### Positlons-Kodierung als Rast-Sensor

Bislang wurde neben Hall-Sensoren zur Kodierung der Positionen zusätzlich eine Lichtschranke als Rast-Sensor eingesetzt, der das Erreichen der Rastmulde mit geringem Toleranzfeld signalisiert. Seine Aufgabe besteht primär darin, die Gültigkeit der Bitkodierung zu sichern, weil die Hall-Sensoren in einem breiteren Toleranzfeld zu etwas unterschiedlichen Zeiten schalten. Mit der "vorausschauenden" Fahrweise unter Berücksichtigung der bekannten Anordnung der Positionen liegt jedoch schon Im vorhinein fest, ob in der jeweils nächsten Rastposition angehalten werden soll oder ob sie zu Überfahren Ist. Die Bestimmung des Bitcodes dient damit allenfalls noch zur Verifizierung der Position, die auch nach dem Einschwingen bzw. dem Überfahren erfolgen kann. Dies erlaubt die Einsparung des zusätzlichen Rast-Sensors.

### Grund-Prinzip

1. Eine Rastposition gilt als erreicht, sobald nur einer der Sensor-Kanäle signalisiert. Sie gilt als verlassen nach einer festen Zeitspanne oder auch wenn das entprellte Sensor-Signal auf allen Kanälen wieder abgefallen ist. Das Kodewort "Null" kennzeichnet den ausgerasteten Zustand (mit *n* binären Sensorkanälen lassen sich so max. 2" - 1 Positionen kodleren).
2. Der Bitcode gilt nach dem Einrasten als gültig nach einer Entprelldauer die so festgelegt ist daß ein eventuelle Pendelbewegung in der Rast soweit abgeklungen ist, daß die Position sicher im stabilen Ansprechbereich der Sensoren bleibt.

### Weitere Anwendungen

Die Anwendung beschränkt sich nicht auf die Positionierung von optischen Elementen Im Strahlengang sondern umfaßt beliebige Objekte in Wechselmagazinen die schnell und genau positioniert werden sollen wie z.B. mechanische oder elektrische Schaltvorrichtungen, Meßköpfe, Werkzeuge, Getriebe, Formelemente, Dosen oder ähnliches.

### Erreichte Vorteile

- Größere Fahrgeschwindigkeit und Kürzere Einschwingdauer erlauben einen schnelleren Wechsel, Insbesondere auch Über mehrere Positionen hinweg.
- Geringere elektrische und mechanische Beanspruchung von Antrieb und Rastmechanismus verlängern die Lebensdauer.
- Geringere Belastung der Stromversorgung und bessere Unterdrückung von elektrischen Störimpulsen (EMV).
- Vermeidung von mechanischen Erschütterungen und Geräuschentwicklung
- Der harmonisch sanfte Wechselvorgang besticht durch eleganten visuellen und akustischen Gesamteindruck, der hohe Präzision vermittelt.
- Kostenelnsparung

## Patentansprüche

1. Verfahren zur Ansteuerung eines Wechselmagazins für Mikroskope mit zwei oder mehreren festgelegten Umschaltpositionen, einem motorischen Antrieb für das Wechselmagazin und einer mechanischen Rastvorrichtung, die innerhalb eines gewissen Fangbereichs eine exakte Positionierung in der jeweiligen Rastposition bewirkt, wobei die anzufahrende Rastposition mit einer herab gesetzten Restgeschwindigkeit angefahren wird, **dadurch gekennzeichnet, dass** das Geschwindigkeitsprofil der Umschaltbewegung v(x), wobei x die Wegkoordinate der Umschaltbewegung ist, so gesteuert wird, dass sich
- entweder eine durch den motorischen Antrieb gesteuerte vor dem Fangbereich beginnende Bremsrampe der Geschwindigkeit ergibt,
- oder eine durch den motorischen Antrieb gesteuerte Anfahrrampe der Geschwindigkeit und eine vor dem Fangbereich beginnende Bremsrampe der Geschwindigkeit ergibt,
dass die Geschwindigkeitssteuerung des motorischen Antriebs anhand der Fahrzeit bei ungefähr bekannter Geschwindigkeit erfolgt, so dass letztlich die Geschwindigkeit (v) über die Zeit als Profil v(x(t)) = v(t) gesteuert wird,
und dass der motorische Antrieb durch einen elektrischen Gleichstrom-Motor mit Nebenschlussverhalten erfolgt, dessen Geschwindigkeitsprofil v(x) mittels der Antriebsspannung U(t) gesteuert wird.

2. Verfahren nach Anspruch 1, **dadurch gekennzeichnet, dass** ein Geber vorhanden ist, der das Erreichen einer Rastposition signalisiert.

3. Verfahren nach Anspruch 2, **dadurch gekennzeichnet, dass** der Bremsvorgang aufgeteilt wird in eine Vorbrensung vor Erreichen der Zielposition und eine Rastbremsung, die durch das Gebersignal im Fangbereich der Rast ausgelöst wird.

4. Verfahren nach Anspruch 3, **dadurch gekennzeichnet, dass** die Vorbremsung durch eine Zeitfunktion v(t) gesteuert wird, die - im Falle einer Fahrstrecke, welche mindestens eine Umschaltposition überfährt, - mit einer geeignet festgelegten Verzögerungszeit (t_{AV}) ab dem Rastsignal beginnt, das der Zielposition vorausgeht.

5. Verfahren nach einem der vorhergehenden Ansprüche, **dadurch gekennzeichnet, dass** die Motorspannung des motorischen Antriebs mittels Pulsweiten-Modulation über das Tastverhältnis gesteuert wird.

## Claims

1. Method for controlling a position-changing device for microscopes with two or more predetermined change-over positions, a motoric drive for the position-changing device, and a mechanical locking arrangement, which within a certain catching area brings about a precise positioning in the respective locking position whereby the targeted locking position is approached with a reduced residual speed,
**characterized in that** the speed profile of the change-over movement v(x), with x representing the path coordinate of the change-over movement, is controlled such that
- either, controlled by the motoric drive, a braking ramp of the speed is achieved which begins before reaching the catching area,
- or, controlled by the motoric drive, a starting ramp of the speed and a braking ramp of the speed is achieved, with the latter beginning before reaching the catching area,
that the speed control of the motoric drive occurs in dependence of the travelling time at an approximately known speed so that in the end the speed (v) is controlled over the time as profile v(x(t) )=v(t),
and that the motoric drive is an electric direct-current motor with shunt characteristics the speed profile v(x) of which is controlled by means of the drive voltage U(t).

2. Method according to claim 1, **characterized in that** there is a transmitter which indicates the arrival at a locking position.

3. Method according to claim 2, **characterized in that** the braking process is divided into a primary braking prior to arriving at the target position and a locking braking which is triggered by the transmitter signal in the catching area of the locking position.

4. Method according to claim 3, **characterized in that** the primary braking is controlled by a time-function v(t) which - in the case of a travel distance which passes at least one change-over position - starts with a suitable predetermined deceleration time (t_{AV}) after the change-over signal which precedes that of the target position.

5. Method according to any of the preceding claims, **characterized in that** the motor voltage of the motoric drive is controlled by means of pulse-width modulation of the mark-space ratio.

## Revendications

1. Procédé de commande d'un magasin échangeur pour microscope ayant deux ou plusieurs positions de commutation fixees, un dispositif d'entraînement moteur pour le magasin échangeur et,un dispositif d'arrêt mécanique qui donne un positionnement exact dans la position d'arrêt respective à l'interieur d'une certaine zone de préhension, la position d'arrêt à atteindre étant atteinte à une vitesse résiduelle réduite, **caractérisé par le fait que** l'on commande le profil de vitesse du mouvement de commutation v(x), x étant la coordonnée sur trajectoire du mouvement de commutation, de telle sorte que
- soit il en résulte pour la vitesse une rampe de freinage commençant avant la zone de préhension et commandée par le dispositif d'entraînement moteur,
- soit il en résulte pour la vitesse une rampe,d'approche et une rampe de freinage commençant avant la zone de préhension et commandée par le dispositif d'entraînement moteur,
que la commande de vitesse du dispositif d'entraînement moteur s'effectue à l'aide de la durée de parcours pour une vitesse approximativement connue de manière à commander finalement la vitesse (v) en fonction du temps comme profil v(x(t)) =v(t),
et que l'entraînement moteur est effectué par un moteur électrique avec caracteristique shunt dont le profil de vitesse v(x) est commandé au moyen de la tension d'entraînement U(t).

2. Procédé selon la revendication 1, **caractérisé par le fait qu'**il y a un transmetteur qui signale qu'une position d'arrêt est atteinte.

3. Procédé selon la revendication 2, **caractérisé par le fait que** l'on divise l'opération de freinage en un freinage préalable avant d'atteindre la position visée et un freinage d'arrêt qui est déclenché par le signal de transmetteur dans la zone de préhension de l'arrêt.

4. Procédé selon la revendication 3, **caractérisé par le fait que** l'on commande le freinage préalable avec une fonction temporelle v(t) qui - dans le cas d'un trajet qui passe par au moins une position de commutation - commence avec un retard (t_{AV}) fixe de manière appropriée à partir du signal d'arrêt qui précède la position visée.

5. Procédé selon l'une des revendications précédentes, **caractérisé par le fait que** l'on commande la tension de moteur du dispositif d'entraînement au moyen d'une modulation de,largeur d'impulsion par l'intermédiaire du taux d'impulsions.
